# EUROPÄISCHE PATENTSCHRIFT

(11) **EP 1 801 352 B1**
(45) Veröffentlichungstag und Bekanntmachung des Hinweises auf die Patenterteilung: **21.03.2012**
(21) Anmeldenummer: 06090213.7
(22) Anmeldetag: 30.11.2006
(51) Int. Cl.: F01D 5/28

(54) **Vorderkantenausbildung für die Verdichterschaufeln von Gasturbinentriebwerken**
Leading edge construction of gas turbine compressor blades
Structure de bord d'attaque pour aube de compresseur de turbine à gaz

(30) Priorität: 21.12.2005 DE 102005061673
(43) Veröffentlichungstag der Anmeldung: 27.06.2007
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE); Heinrich, Roland, 12349 Berlin (DE)
(74) Vertreter: Gross, Felix

(56) Entgegenhaltungen:
- DE-A1- 3 821 005
- DE-A1- 19 803 589
- JP-A- 59 215 905
- US-B1- 6 431 837

## Beschreibung

Die Erfindung bezieht sich auf eine Verdichterschaufel für ein Gasturbinentriebwerk mit den Merkmalen des Oberbegriffes des Anspruches 1.

Verdichterschaufeln sind die ersten rotierenden Gebilde in einem Gasturbinentriebwerk und durch Fliehkräfte, Gasdruck und von dem strömenden Medium angeregte Schwingungen des Schaufelblattes, insbesondere aber auch durch angesaugte Fremdpartikel und Vogelschlag, erheblichen Belastungen ausgesetzt. Sie sollen ein Uberschallprofil mit einer möglichst dünnen, scharfen Gestaltung der Einlaufkante (Vorderkante) haben. Einer derartigen Ausbildung steht jedoch die Belastung und Beschädigung der Vorderkante durch auftreffende Fremdkörper entgegen.

Die erosive Wirkung und weitere Beschädigungen, hervorgerufen durch das Aufschlagen von Fremdpartikeln, treten besonders deutlich an der Einlaufkante und auf der Druck-seite der Verdichterschaufel auf. Einer daher mit einem möglichst großen Radius ausgebildeten, stabilen Einlaufkante der Verdichterschaufel zur Verringerung der Beschädigung durch Fremdkörper in diesem Bereich stehen jedoch ein erheblicher aerodynamischer Verlust und eine damit verbundene Verringerung der Triebwerksleistung entgegen.

Um einer weiteren Zerstörung einer im Laufe der Zeit an der Vorderkante durch Fremdkörper beschädigten Verdichterschaufel zu begegnen, müssen alle Fanschaufeln von Zeit zu Zeit im Bereich der Einlaufkante nachgeschliffen und reprofiliert werden. Abgesehen davon, dass dieses Anschleifen und Reprofilieren mit einem erheblichen Arbeitsaufwand verbunden ist, kann die beschädigte Vorderkante nicht optimal angeschliffen werden. Das heißt, durch das Anschleifen vergrößert sich das Einlaufkantenprofil und damit auch der aerodynamische Verlust. Darüber hinaus kann die Einlaufkante auch nicht endlos nachgeschliffen werden.

Die Verdichterschaufeln eines Gasturbinentriebwerks werden zusätzlich und in erheblichem Umfang durch die beim Auftreffen eines Vogels auf die Fanschaufeln erzeugte Schlagwirkung belastet. Auch diesbezüglich ist ein kleiner Einlaufkantenradius, das heißt, eine spitze, scharfe Ausbildung der Einlaufkante der Verdichterschaufel von Vorteil, da die scharfe Vorderkante den Vogel sofort durchschneidet und dadurch die Schlagwirkung auf die Schaufel und deren Belastung deutlich verringert wird. Aber auch der unter diesem Aspekt erforderlichen Gestaltung der Einlaufkante steht die Gefahr ihrer schnellen Beschädigung durch Erosion und der damit verbundene Arbeitsaufwand bei der Instandhaltung und der aerodynamische Verlust entgegen.

Aus der US 6 431 837 B1 ist eine Verdichterschaufel für ein Gasturbinentriebwerk mit den Merkmalen des Oberbegriffes des Patentanspruches 1 vorbekannt.

DE 38 21 005 zeigt eine Turbinenshaufel mit einer Einlaufkanten-schiene, die formschüssig in einer Halkenut sowie entgegen der Fliehkraft an einem Anschlag gehalten wird.

Aus der DE 198 03 589 A1 ist ein Verfahren zum Herstellen der Schaufel einer Wasserturbine oder einer Flüssigkeitspumpe vorbekannt, bei welcher die angesetzte Leiste aus Polyurethan gebildet ist und durch eine Zapfen-NutVerbindung und zusätzliches Verschrauben, Verkleben od. dgl. mit der Schaufel verbunden ist.

Der Erfindung liegt die Aufgabe zugrunde, eine aerodynamisch vorteilhafte Verdichterschaufel mit langer Lebensdauer zu schaffen, bei welcher die Belastung erhöht und der Instandhaltungsaufwand verringert werden kann.

Erfindungsgemäß wird die Aufgabe mit einer gemäß den kennzeichnenden Merkmalen des Patentanspruchs 1 ausgebildeten Verdichterschaufelfür ein Gasturbinentriebwerk gelöst. Aus den Unteransprüchen ergeben sich vorteilhafte Weiterbildungen und zweckmäßige Ausgestaltungen der Erfindung.

Kern der Erfindung ist die Ausbildung einer an der Vorderkante der Verdichterschaufel, und zwar in dem Schaufelabschnitt, in dem Überschallbedingungen vorliegen, separaten, lösbar angebrachten Einlaufkantenschiene, die bei Beschädigung oder Verschleiß gegen eine neue Einlaufkantenschiene ausgetauscht werden kann. Dadurch wird der Instandhaltungsaufwand deutlich verringert und die Lebensdauer der Fanschaufeln insgesamt verlängert. Im Flugbetrieb steht eine im Bereich der Vorderkante optimal gestaltete Verdichterschaufel zur Verfügung, die den in einem begrenzten Schaufelbereich herrschenden Überschallbedingungen und den durch Vogelschlag bedingten Problemen gerecht wird.

Die Einlaufkantenschiene, die aus einer dreieckförmigen Spitze und einem Schienenfuß besteht, ist formschlüssig und elastisch in einer Haltenut an der Vorderkante der Verdichterschaufel sowie entgegen der Fliehkraft an einem Anschlag gehalten.

Gemäß einem wesentlichen Merkmal der Erfindung besteht die Einlaufkantenschiene aus einem harten, erosionsfesten Material. Sie ist aber so schlank dimensioniert, dass sie elastisch verformbar ist und in die entlang der gekrüaunten Vorderkante der Verdichterschaufel verlaufende Haltenut unter elastischer Verformung eingeschoben werden kann und sich in der Haltenut elastisch verklemmt.

Die Einlaufkantenschiene ist zudem unter dem Aspekt eines geringen Gewichtes dimensioniert, so dass die am Anschlag wirkenden Fliehkräfte gering sind und selbst ein Verlust der Einlaufkantenschiene den Betrieb nur geringfügig beeinflusst.

Ein Ausführungsbeispiel der erfindungsgemäßen Verdichterschaufel für en Gasturbinentriebwerk wird anhand der Zeichnungen näher erläutert. Es zeigt:
- Fig. 1: eine Schnittansicht des Einlaufkantenbereichs der Verdichterschaufel in einer ersten Ausfüh- rungsform:
- Fig. 2: eine Schnittansicht des Einlaufkantenbereichs der Verdichterschaufel in einer zweiten Ausfüh- rungsform;
- Fig. 3: eine Seitenansicht der Verdichterschaufel vor dem Einschieben des auswechselbaren Einlaufkan- tenteils und
- Fig. 4: eine perspektivische Ansicht der Verdichterschaufel mit an einem Teilbereich der Vorderkante der Schaufel montierter, auswechsel- barer Einlaufkantenschiene.

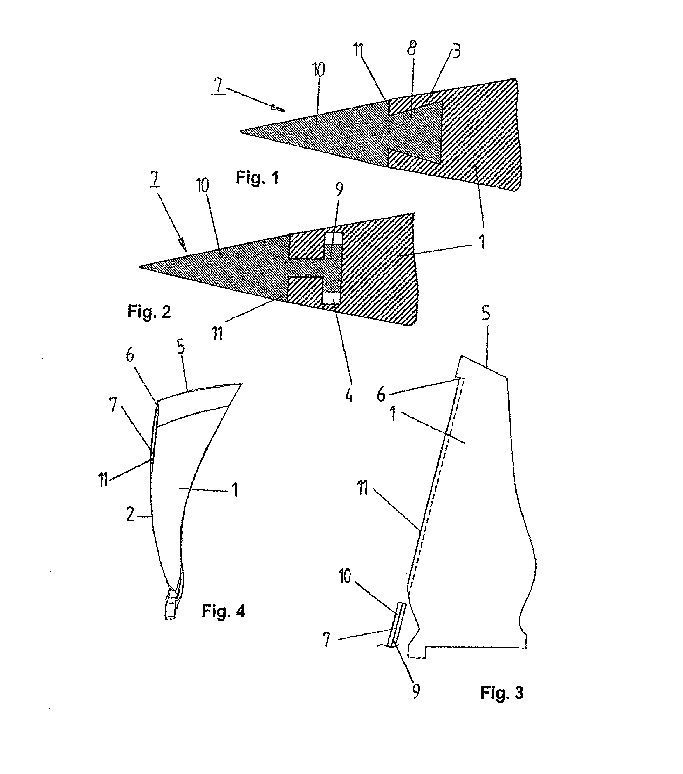

Wie die Fig. 1 und 2 zeigen, weist die Fanschaufel 1, die massiv oder hohl ausgebildet sein kann und aus Titan besteht, an der Vorderkante 2 in einem bestimmten, abgeflachten Abschnitt 11 eine Nut 3, 4 auf, die in den beiden Ausführungsformen als schwalbenschwanzförmige Haltenut 3 oder T-förmige Haltenut 4 ausgebildet ist. Der abgeflachte Abschnitt 11 mit der Haltenut 3 bzw. 4 ist in dem Bereich der Fanschaufel 1 ausgebildet, in dem Überschallbedingungen vorliegen, endet jedoch in geringem Abstand von der Schaufelspitze 5, so dass am oberen Ende der Haltenut vor der Schaufelspitze 5 ein Anschlag 6 gebildet ist. In die Haltenut 3, 4 ist eine Einlaufkantenschiene 7 eingesetzt, die einen entsprechend dem Nutprofil T- oder schwalbenschwanzförmig ausgebildeten, bis zum Anschlag 6 in die Haltenut 3, 4 eingeschobenen Schienenfuß 8, 9 aufweist. Durch die formschlüssige Verbindung und den Anschlag 7 ist die Einlaufkantenschiene 7 an der Fanschaufel 1 gehalten und gegen Herausfallen gesichert.

Die Einlaufkantenschiene 7 besteht aus einem harten, relativ erosionsfesten Material, beispielsweise Nirosta-Messerstahl bzw. Mangan-Hartstahl, und ist im Profil so schlank dimensioniert, dass sie noch ausreichend elastisch ist, um in die entsprechend der Schaufelform gekrümmt verlaufende Haltenut 3, 4 an der Vorderkante der Verdichterschaufel 1 eingeschoben werden zu können. Aufgrund der elastischen Verformung der Einlaufkantenschiene 7 beim Einschieben wird diese in der Haltenut 3, 4 verklemmt und elastisch fixiert. Zusätzlich kann der Schienenfuß 8 bzw. 9 der Einlaufkantenschiene 7 in der Haltenut 3 bzw. 4 verklebt werden. Der Radius an der vorderen Kante der Spitze 10 der Einlaufkantenschiene liegt etwa bei 0,01 bis 0,5 mm.

Eine durch Vogelschlag oder Einwirkung anderer Fremdkörper im Bereich der Vorderkante 2 beschädigte Fanschaufel 1 kann durch Entfernen der beschädigten Einlaufkantenschiene und Einsetzen einer neuen Einlaufkantenschiene 7 mit geringem Aufwand repariert werden. Nach der Instandsetzung steht wieder eine Verdichterschaufel 1 mit spitz ausgebildeter Vorderkante 2 zur Verfügung, die einerseits den an die aerodynamische Ausbildung der Schaufel gestellten Anforderungen gerecht wird und andererseits die durch Vogelschlag bedingten Schäden am Triebwerk begrenzt. Der durch das Nachschleifen beschädigter Einlaufkanten erforderliche hohe Instandhaltungsaufwand wird deutlich verringert. Aufgrund des mehrfach möglichen Auswechselns der Einlaufkantenschiene 7 wird die Lebensdauer der Verdichterschaufel 1 erhöht. Positiv auf die Lebensdauer der Verdichterschaufel wirkt sich zudem aus, dass während des Flugbetriebs an der auswechselbaren Einlaufkantenschiene 7 erzeugte Risse sich im angrenzenden Teil der Verdichterschaufel 1 nicht fortsetzen können und somit die betreffenden Verdichterschaufeln weiter im Einsatz bleiben können. Aufgrund des geringen Gewichts der Einlaufkantenschiene 7 kann der Flugbetrieb auch bei Verlust der Einlaufkantenschiene ohne Schwierigkeiten fortgesetzt werden. Die während des Flugbetriebs am Anschlag 6 wirkenden, von der Einlaufkantenschiene 7 ausgehenden Fliehkräfte sind so gering, dass die Verdichterschaufel 1 nicht zerstört werden kann.

### Bezugezeichenliste

- 1: Verdichterschaufel
- 2: Vorderkante
- 3: Schwalbenschwanzförmige Haltenut
- 4: T-förmige Haltenut
- 5: Schaufelspitze
- 6: Anschlag
- 7: Einlaufkantenschiene
- 8: Schienenfuß (Schwalbenschwanzprofil)
- 9: Schienenfuß (T-Profil)
- 10: dreieckförmige Spitze v. 7
- 11: abgeflachter Abschnitt v. 2

## Patentansprüche

1. Verdichterschaufel für ein Gasturbinentriebwerk, mit einer an der Vorderkante (2) der Verdichterschaufel (1) angeordneten Haltenut (3, 4) in der eine Einlaufkantenschiene (7) verklemmt ist,
wobei die Einlaufkantenschiene (7) aus einem erosionsfesten, harten Material besteht,
**dadurch gekennzeichnet,**
**dass** die Haltenut (3, 4) mit der eingesetzten Einlaufkantenschiene (7) in einem Abschnitt (11) der Vorderkante (2) der Verdichterschaufel (1) angeordnet ist, der sich im Überschallbereich der Verdichterschaufel (1) erstreckt,
**dass** die Haltenut (3, 4) zur Ausbildung eines Anschlages (6) im Abstand von der Schaufelspitze (5) endet,
**dass** die Einlaufkantenschiene (7) an dem Anschlag (6) entgegen der Fliehkraftwirkung gehalten ist,
**dass** die Einlaufkantenschiene (7) austauschbar ist,
**dass** die Einlaufkantenschiene (7) in der Längsachse elastisch verformbar und in der Haltenut (3, 4) formschlüssig und elastisch verklemmt gehalten ist,
**dass** die Einlaufkantenschiene (7) zur Gewährleistung der für das Einschieben in die entsprechend der Schaufelform gekrümmt verlaufende Haltenut (3, 4) erforderlichen Elastizität schlank dimensioniert ist.

2. Verdichterschaufel nach Anspruch 1, **dadurch gekennzeichnet, dass** die Einlaufkantenschiene (7) aus nicht rostendem Messerstahl oder Mangan-Hartstahl gebildet ist.

3. Verdichterschaufel nach Anspruch 1, **dadurch gekennzeichnet, dass** die Einlaufkantenschiene (7) eine im Wesentlichen dreieckförmige Spitze (10) und einen schwalbenschwanzförmig oder T-förmig profilierten Schienenfuß (8, 9) umfasst, der in die in dem abgeflachten Abschnitt (11) ausgebildete, entsprechend schwalbenschwanzförmig oder T-förmig ausgebildete Haltenut (3, 4) eingreift.

## Claims

1. Compressor blade for a gas-turbine engine having a retaining groove (3, 4) arranged on the leading edge (2) of the compressor blade (1), inside which groove a leading-edge rail (7) is clamped,
with the leading-edge rail (7) being made of an erosion-proof and hard material,
**characterized in**
**that** the retaining groove (3, 4) with the inserted leading-edge rail (7) is arranged in a section (11) of the leading edge (2) of the compressor blade (1) which extends in the supersonic range of the compressor blade (1),
**that** the retaining groove (3, 4) ends at a distance from the blade tip (5) to form a stop (6),
**that** the leading-edge rail (7) is held at the stop (6) against the centrifugal force effect,
**that** the leading-edge rail (7) is replaceable,
**that** the leading-edge rail (7) is elastically deformable in the longitudinal axis and is held with positive and elastic clamping in the retaining groove (3, 4),
**that** the leading-edge rail (7) is slimly dimensioned to assure the elasticity necessary for sliding into the retaining groove (3, 4) with curved form to match the shape of the blade,

2. Compressor blade in accordance with Claim 1, **characterized in that** the leading-edge rail (7) is made of stainless knife steel or hard manganese steel.

3. Compressor blade in accordance with Claim 1, **characterized in that** the leading-edge rail (7) includes a substantially triangular tip (10) and a rail base (8, 9) of dovetail or T shaped profile, said rail base engaging in the correspondingly, dovetail or T, shaped retaining groove provided in the flattened section (11).

## Revendications

1. Aube de compresseur pour un moteur à turbine à gaz, comprenant une encoche d'arrêt (3, 4) disposée sur le bord d'attaque (2) de l'aube de compresseur (1) et dans laquelle est coincée une arête de bord d'attaque (7),
l'arête de bord d'attaque (7) étant constituée d'un matériau résistant à l'érosion et dur,
**caractérisée en ce**
**que** l'encoche d'arrêt (3, 4) avec l'arête de bord d'attaque (7) insérée est disposée dans une partie (11) du bord d'attaque (2) de l'aube de compresseur (1) qui s'étend dans la zone supersonique de l'aube de compresseur (1),
**que** l'encoche d'arrêt (3, 4) se termine à distance du bout d'aube (5) afin de former une butée (6),
**que** l'arête de bord d'attaque (7) est maintenue sur la butée (6) en opposition à la force centrifuge,
**que** l'arête de bord d'attaque (7) est remplaçable,
**que** l'arête de bord d'attaque (7) est déformable par élasticité selon l'axe longitudinal et est maintenue coincée élastiquement dans l'encoche d'arrêt (3, 4) par complémentarité de forme,
**que** l'arête de bord d'attaque (7) est dimensionnée mince afin d'assurer l'élasticité requise pour l'insertion dans l'encoche d'arrêt (3, 4) au tracé incurvé correspondant à la forme de l'aube.

2. Aube de compresseur selon la revendication n° 1, **caractérisée en ce que** l'arête de bord d'attaque (7) est constituée d'acier de coutellerie inoxydable ou d'acier dur au manganèse.

3. Aube de compresseur selon la revendication n° 1, **caractérisée en ce que** l'arête de bord d'attaque (7) comprend une pointe (10) essentiellement triangulaire et un pied d'arête (8, 9) profilé en queue d'aronde ou en forme de T qui s'engage dans l'encoche d'arrêt (3, 4) formée dans la partie aplatie (11) et ayant une forme correspondante en queue d'aronde ou de T.
